# EUROPÄISCHE PATENTSCHRIFT

(11) **EP 4 673 782 B1**
(45) Veröffentlichungstag und Bekanntmachung des Hinweises auf die Patenterteilung: **09.12.2026**
(21) Anmeldenummer: 24708966.7
(22) Anmeldetag: 21.02.2024
(51) Int. Cl.: G02B 27/01

(54) **HEAD-UP-DISPLAY MIT EINER KONKAVSPIEGELOPTIMIERUNG UND/ODER -ABSENKUNG IN DIE PARKPOSITION MITTELS EINES EXZENTERS**
HEAD-UP DISPLAY IN WHICH A CONCAVE MIRROR IS OPTIMIZED AND/OR LOWERED INTO THE PARK POSITION BY MEANS OF AN ECCENTRIC
AFFICHAGE TÊTE HAUTE DANS LEQUEL UN MIROIR CONCAVE EST OPTIMISÉ ET/OU ABAISSÉ DANS LA POSITION DE STATIONNEMENT AU MOYEN D'UN EXCENTRIQUE

(30) Priorität: 28.02.2023 DE 102023104923
(43) Veröffentlichungstag der Anmeldung: 07.01.2026
(73) Patentinhaber: Bayerische Motoren Werke Aktiengesellschaft, 80809 München (DE)
(72) Erfinder: RUHMKE, Holger, 85055 Ingolstadt (DE)
(86) Internationale Anmeldenummer: PCT/DE2024/100138
(87) Internationale Veröffentlichungsnummer: WO 2024/179642

(56) Entgegenhaltungen:
- DE-A1- 102023 118 601
- JP-A- 2021 173 769

## Beschreibung

Die Erfindung betrifft eine Projektionseinheit für eine Blickfeldanzeigevorrichtung, die auch unter der Bezeichnung Head-Up-Display (HUD) bekannt ist und insbesondere in einem Kraftfahrzeug oder einem anderen Land-, Luft- oder Wasserfahrzeug zum Einsatz kommen kann. Blickfeldanzeigevorrichtungen dieser Art sind ausgebildet zur Erzeugung eines ins Blickfeld eines Benutzers eingeblendeten virtuellen Bilds über Reflexion an einer Fahrzeugscheibe, insbesondere einer Frontscheibe, oder an einer eigens hierzu vorgesehenen Combinerscheibe, die im Blickfeld des Benutzers angeordnet ist. Die Erfindung richtet sich auch auf eine solche Blickfeldanzeigevorrichtung und auf ein damit ausgestattetes Fahrzeug.

Insbesondere für Kraftfahrzeuge ist es bekannt, mittels eines Head-Up-Displays Anzeigeinhalte wie Angaben über Geschwindigkeitsbegrenzungen oder andere nützliche Navigations- und Fahrzeugbedienungshinweise in Form eines virtuellen Bilds dem vom Fahrer beobachteten realen Umgebungsbild vor dem Fahrzeug zu überlagern, damit er seinen Blick zum Ablesen dieser Anzeige nicht von der Straße abwenden muss. Hierzu umfasst ein HUD eine im Blickfeld des Fahrers angeordnete Reflexionsscheibe, die für das rückseitig einfallende Umgebungslicht weitgehend transparent ist und entweder als ein Abschnitt der Frontscheibe oder als eine fahrzeuginnenseitig vor der Frontscheibe vorgesehene Combinerscheibe ausgebildet ist. Zur Erzeugung des Anzeigeinhalts umfasst ein HUD in klassischer Bauweise eine unterhalb der Frontscheibe im Inneren der Instrumententafel untergebrachte Projektionseinheit. Diese enthält typischerweise ein Display zur Erzeugung eines Lichtstrahlenbündels mit gewünschtem Anzeigeinhalt sowie eine geeignete Abbildungs- und Projektionsoptik, um das erzeugte Lichtstrahlenbündel so zu formen und auf die Reflexionsscheibe zu lenken, dass es von dieser zu den Augen des Fahrers reflektiert wird und er dadurch das virtuelle Anzeigebild in einer geeigneten Größe und Entfernung hinter der Reflexionsscheibe sehen kann. Bei einer klassischen HUD-Bauweise umfasst die Projektionsoptik einen Konkavspiegel, dessen Abmessungen linear mit der Größe des virtuellen Anzeigebereichs skalieren und diesen daher auch beschränken.

Die Implementierung eines solchen Head-Up-Displays im Fahrzeug ist unter anderem aufgrund von Bauraumrestriktionen sehr komplex. Eine wichtige Komponente seiner Projektionseinheit ist dabei eine transparente Deckscheibe (auch Deckglas genannt), die das Schutzgehäuse der Projektionseinheit ausgangsseitig verschließt und das erzeugte Lichtstrahlenbündel transmittiert. Die Deckscheibe sollte so ausgebildet sein, dass keine direkten und indirekten Lichtreflexe durch Reflexion von Außenlicht und insbesondere von Sonnenlicht an der Deckscheibe in den HUD-Strahlengang und damit in das Auge des Fahrers gelangen. Hierdurch ergibt sich unter anderem eine spezifische gekrümmte Deckscheibenform zum Lenken störender Lichtreflexe aus dem Strahlengang, die auch als geometrische Entspiegelung bezeichnet wird und eine beträchtliche Abmessung der Deckscheibe in Höhenrichtung des Fahrzeugs erfordert. Dabei müssen bei der Deckscheibenauslegung Einflüsse durch den Fahrzeugbauraum, wie dessen Design und Packagevorhalt, berücksichtigt werden. Von den internen HUD-Komponenten stellt vor allem der Konkavspiegel eine Restriktion bei der Deckscheibenauslegung dar, denn zu dem Konkavspiegel muss die Deckscheibe vorbestimmte Mindestabstände in Höhenrichtung des Fahrzeugs einhalten.

Wenn das HUD nicht benutzt wird, befindet sich der Konkavspiegel üblicherweise in seiner Parkposition, bei der ein vertikaler Abstand zwischen der Deckscheibe und dem Konkavspiegel in der Regel am geringsten ist. Die Parkposition wird typischerweise durch eine Rotation des Konkavspiegels um seine Drehachse erreicht, sodass sein Fokus aus dem Strahlengang des HUD herausbewegt wird, um ein unerwünschtes Fokussieren des von außen in die Projektionseinheit gelangenden Lichts auf die licht- und wärmeempfindliche HUD-Optik und -Elektronik zu verhindern.

Die Größe des Konkavspiegels wird zusätzlich auch durch opto-mechanische Restriktionen beeinflusst. So sitzen unterschiedliche Fahrer abhängig von ihrer Körpergröße in unterschiedlichen Positionen im Fahrzeug. Damit jeder Fahrer eine für ihn optimale HUD-Anzeige und Eyebox-Position bekommt, werden Einstellmöglichkeiten vorgesehen, die ebenfalls durch die Rotation des Konkavspiegels um die genannte Spiegeldrehachse realisierbar sind.

In diesem Zusammenhang offenbart beispielsweise JP 2021-173769 A eine zum Einbau in einem Fahrzeug ausgebildete Vorrichtung (beispielsweise ein Head-up-Display) zur Anzeige eines virtuellen Bilds durch das Projizieren von Displaylicht auf eine Projektionseinheit, die in einer Windschutzscheibe des Fahrzeugs oder in einer hiervon separaten Combinerscheibe vorgesehen sein kann. Zur Anpassung der Bildhöhe an verschiedene Fahrer umfasst diese Vorrichtung einen rotierenden Reflexionsspiegel, beispielsweise einen Konkavspiegel. Der rotierende Reflexionsspiegel enthält eine erste Drehwelle und eine zweite Drehwelle, die in axialer Richtung zu gegenüberliegenden Seiten überstehen und über den Spiegelrahmen unbeweglich miteinander verbunden sind, sodass durch deren Drehung die Reflexionsrichtung des Anzeigelichts, das auf die Projektionseinheit gerichtet ist, und somit die Höhenposition des virtuellen Bilds geändert wird. Zur Lagerung umfasst die Vorrichtung ein erstes elastisches Element, das die erste Drehwelle mit einer Rückstellkraft entlang einer Wirkungslinie in radialer Richtung beaufschlagt, und ein erstes Lagerteil, das die erste Drehwelle von der radial gegenüberliegenden Seite des ersten elastischen Elements lagert. Ähnlich umfasst die Vorrichtung ein zweites elastisches Element, das die zweite Drehwelle mit einer Rückstellkraft entlang einer Wirkungslinie in radialer Richtung beaufschlagt, und ein zweites Lagerteil, das die zweite Drehwelle mit dem Radiallager von der gegenüberliegenden Seite des zweiten elastischen Elements in der radialen Richtung lagert.

Dabei unterscheidet sich meist die effektiv genutzte Konkavspiegelfläche für unterschiedliche Fahrer aufgrund von unterschiedlichen Strahlenverläufen bis zur individuellen Eyebox-Position. Um die unterschiedlichen Sitzpositionen abzudecken, wird der Konkavspiegel daher in der Regel großflächiger ausgeführt, als es für nur eine fix vorgegebene Sitzposition im Fahrzeug nötig wäre. Die optische Performance wird unter Berücksichtigung der unterschiedlichen Verstellmöglichkeiten des Konkavspiegels optimiert. Dies führt in der Regel zu Kompromissen, da durch eine fest vorgegebene Rotationsachse die Freiheitsgrade für die Optimierung eingeschränkt sind.

Es ist Aufgabe der vorliegenden Erfindung, eine alternative oder im Hinblick auf den Bauraum, die optische Performance und/oder andere Gesichtspunkte verbesserte Projektionseinheit für eine Blickfeldanzeigevorrichtung anzugeben, die sich insbesondere zum Einsatz in einem Fahrzeug eignet.

Diese Aufgabe wird durch eine Projektionseinheit gemäß Anspruch 1 sowie durch eine diese enthaltende Blickfeldanzeigevorrichtung und ein damit ausgestattetes Fahrzeug gemäß den nebengeordneten Ansprüchen gelöst. Weitere Ausgestaltungen sind in den abhängigen Ansprüchen angegeben. Alle in den Ansprüchen und der nachfolgen Beschreibung für die Projektionseinheit genannten weiterführenden Merkmale und Wirkungen gelten auch in Bezug auf die Blickfeldanzeigevorrichtung und das Fahrzeug, wie auch jeweils umgekehrt.

Gemäß einem ersten Aspekt ist eine Projektionseinheit für eine Blickfeldanzeigevorrichtung vorgesehen, die insbesondere in einem Fahrzeug zum Einsatz kommen kann. Die Blickfeldanzeigevorrichtung kann beispielsweise als ein Head-up-Display (HUD) ausgebildet sein. Beim Fahrzeug kann es sich um ein Kraftfahrzeug, aber auch um ein beliebiges anderes Land-, Luft- oder Wasserfahrzeug handeln.

Die Projektionseinheit besitzt eine zur Erzeugung eines Lichtstrahlenbündels mit gewünschtem Anzeigeinhalt ausgebildete bildgebende Einheit (auch Picture Generating Unit, PGU, genannt), für die grundsätzlich jede Bilderzeugungs-Technologie zum Einsatz kommen kann, die sich insbesondere für ein Fahrzeug eignet. Es kann sich insbesondere um ein Display, beispielsweise einen Flachbildschirm oder ein Waveguide-Display, aber auch um ein Projektorsystem, wie einen DLP-Projektor oder eine mit einem Lichtstrahl ausgeleuchtete oder abgetastete Streuscheibe, und vieles mehr handeln.

Im Strahlengang des von der bildgebenden Einheit erzeugten Lichtstrahlenbündels umfasst die Projektionseinheit (abgesehen von optionalen weiteren optischen Elementen zur Strahlformung und -Umlenkung) einen derart angeordneten und ausgebildeten Konkavspiegel, dass das Lichtstrahlenbündel die Projektionseinheit in einer vorgegebenen erforderlichen Form und Richtung verlässt, um anschließend von einer im Blickfeld eines Benutzers angeordneten, zumindest teilweise transparenten Reflexionsscheibe zu seiner Eyebox reflektiert zu werden und dem Benutzer dadurch den Anzeigeinhalt in Form eines virtuellen Bilds hinter der Reflexionsscheibe darzustellen. Die Reflexionsscheibe kann beispielsweise durch einen Abschnitt einer Fahrzeugscheibe oder durch eine extra vorgesehene Combinerscheibe gebildet sein. Sie ist also Bestandteil der weiter unten angegebenen Blickfeldanzeigevorrichtung, jedoch nicht zwingend auch Bestandteil der Projektionseinheit, die beispielsweise bei der Nutzung der Fahrzeugscheibe auch ohne diese hergestellt und vertrieben werden kann. Im Fall einer extra vorgesehenen Combinerscheibe kann diese jedoch in bekannter Weise auch in der Projektionseinheit (beispielsweise auch bewegbar) integriert sein. Als Eyebox der Blickfeldanzeigevorrichtung wird hierin wie üblich ein zwei- oder dreidimensionaler Raumbereich verstanden, aus dem das virtuelle Bild für den zugehörigen Benutzer uneingeschränkt sichtbar ist.

Der Konkavspiegel ist zur Anpassung der Eyebox an unterschiedliche Benutzer-Größen und -Sitzpositionen durch einen geeigneten Antrieb um eine Spiegeldrehachse rotierbar, die als fester Bestandteil des Konkavspiegels oder in anderer Weise fest mit ihm verbunden ist. Dieser Dreh-Antrieb kann beispielsweise in Form eines Elektromotors oder eines andersartigen Aktors ausgebildet sein, der unmittelbar oder über ein Getriebe mit der Spiegeldrehachse verbunden ist. Die Spiegeldrehachse kann dabei beispielsweise an jedem ihrer beiden Enden in einem zugehörigen Primärlager drehbar gelagert sein. Falls eines der beiden Enden der Spiegeldrehachse in einem bezüglich der Projektionseinheit feststehenden Primärlager gelagert ist, kann dieses Ende besonders gut für den Antrieb geeignet sein. Andernfalls kann der Antrieb beispielsweise auch in einem beweglich montierten Primärlager integriert sein.

Dabei ist zumindest an einem Ende der Spiegeldrehachse das zugehörige Primärlager exzentrisch in einem drehbaren Sekundärlager gelagert. Dieses Sekundärlager (auch Exzenter genannt) lässt sich zu seiner Drehung um eine bezüglich der Projektionseinheit fixierte/ortsfeste Exzenterachse durch mindestens einen mit der Spiegeldrehachse mitrotierenden Mitnehmer antreiben. Der jeweilige Mitnehmer kann mit der Spiegeldrehachse beispielsweise fest verbunden sein und daher mitrotieren und dabei in das Sekundärlager zur Kraftübertragung durch mechanischen Anschlag eingreifen.

Wird die Spiegeldrehachse durch deren Antrieb rotatorisch angetrieben, wird auf dieser Weise über den mindestens einen Mitnehmer gleichzeitig auch das Sekundärlager zu seiner Drehung um die Exzenterachse angetrieben. Dadurch dreht sich auch das darin exzentrisch gelagerte Primärlager um die Exzenterachse. Folglich geht mit der Rotationsbewegung des Konkavspiegels um seine Spiegeldrehachse auch eine überlagerte (nahezu) translatorische Bewegung der Spiegeldrehachse und damit des Konkavspiegels in einer zu der Spiegeldrehachse transversalen Richtung einher. Die dadurch gewonnenen zusätzlichen Freiheitsgrade bei der Verstellung des Konkavspiegels können zur Optimierung verschiedener Aspekte seiner optischen Performance, Größe und/oder Unterbringung im verfügbaren Bauraum genutzt werden. Einige Beispiele für diese Optimierung werden hierin weiter unten beschrieben. Insbesondere lassen sich dadurch Probleme lösen, die eingangs erwähnt wurden:
Die überlagerte Translationsbewegung der Spiegeldrehachse und damit des Konkavspiegels in einer zu der Spiegeldrehachse transversalen Richtung kann beispielsweise als Absenkung des Konkavspielgels in Höhenrichtung des Fahrzeugs implementiert sein. Dadurch kann der Konkavspiegel zum Erreichen der Parkposition im Vergleich zur konventionellen ortsfesten Lagerung der Spiegeldrehachse deutlich tiefer abgesenkt werden und der eingangs erwähnte Bauraumkonflikt mit der Deckscheibe der Projektionseinheit in Parkposition überwunden werden. Alternativ oder zusätzlich kann die hierin vorgestellte überlagerte Translationsbewegung bei der Drehung des Konkavspiegels aber auch zur Optimierung seiner optischen Performance und/oder Größe im Betrieb der Projektionseinheit, insbesondere bei der Eyebox-Anpassung, genutzt werden.

Der konkrete Zusammenhang zwischen der antriebsbedingten Drehbewegung des Konkavspiegels um seine Spiegeldrehachse und der durch den einen oder die mehreren passiven Mitnehmer bedingten Translationsbewegung des Konkavspiegels in Richtung quer zu seiner Spiegeldrehachse kann durch spezifisch wählbare Konstruktionsdetails, wie beispielsweise den radialen Abstand und die Winkelposition des in dem Sekundärlager gelagerten Primärlagers oder die Beweglichkeit bzw. den mechanischen Eingriff des Mitnehmers im Sekundärlager, beeinflusst werden.

Das Primärlager an einem oder an beiden Enden der Spiegeldrehachse kann beispielsweise als Kugelkopf ausgebildet sein, um eine größtmögliche Beweglichkeit der Spiegeldrehachse zu ermöglichen. Das im Sekundärlager gelagerte Primärlager kann darin ortsfest, insbesondere an einem bezüglich des Sekundärlagers fixierten Punkt in einem vorbestimmten radialen Abstand von der Exzenterachse, gelagert, insbesondere auch befestigt, sein. Um wiederum eine größtmögliche Beweglichkeit der Spiegeldrehachse zu ermöglichen, kann das Primärlager im Sekundärlager dabei insbesondere gleit- oder wälzgelagert sein.

Eine Idee der obigen Projektionseinheit besteht somit darin, zur Verstellung des Konkavspiegels seine fest mit ihm verbundene und durch einen (Dreh)-Antrieb aktiv rotierbare Spiegeldrehachse exzentrisch in einem um eine andere Achse (Exzenterachse) drehbaren Sekundärlager zu lagern, das passiv mittels eines oder mehrerer Mitnehmer mit der Spiegeldrehachse mitrotiert. Dies kann für die Verstellung in die oben genannte Parkposition des Konkavspiegels und/oder für eine benutzerspezifische Verstellung oder Eyebox-Anpassung im Betrieb der Blickfeldanzeigevorrichtung, etwa im Fahrbetrieb des Fahrzeugs, ausgelegt sein. Hierdurch kann insbesondere die optische Performance des Gesamtsystems optimiert werden und/oder der Bauraumbedarf der Blickfeldanzeigevorrichtung durch Minimierung der Konkavspiegelfläche und/oder durch eine zusätzliche Absenkung oder Anhebung oder sonstige Transversalbewegung des drehbaren Konkavspiegels reduziert werden.

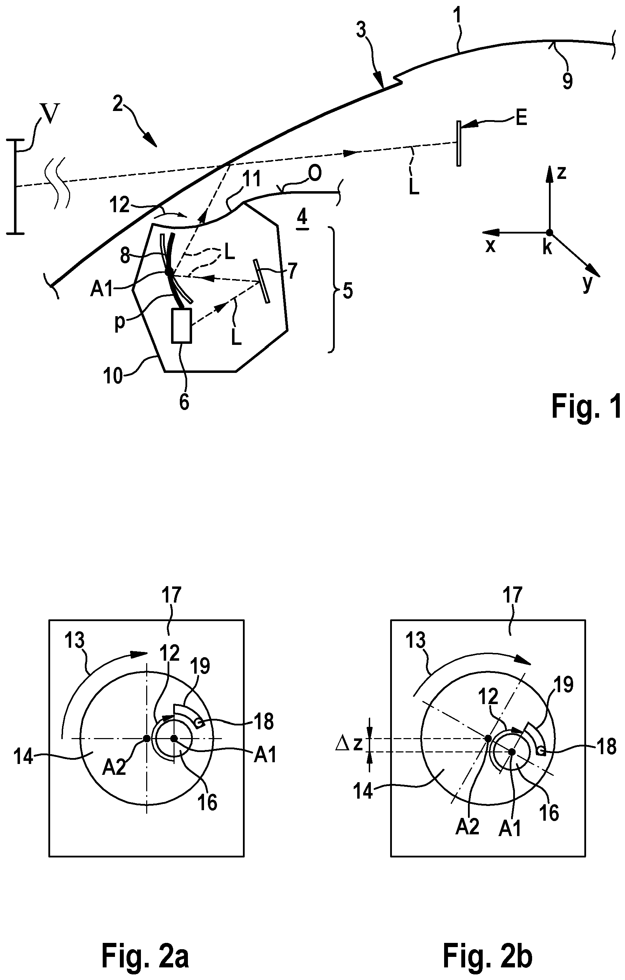

Gemäß einer Ausführungsform umfasst die Projektionseinheit ferner ein schützendes Gehäuse, das die oben genannten Elemente der Projektionseinheit nach außen schützt, mit einer transparenten Deckscheibe, die das Gehäuse ausgangsseitig verschließt und das von der Projektionseinheit im Betrieb ausgegebene Lichtstrahlenbündel transmittiert. Dabei ist durch eine vorbestimmte Winkelstellung der Spiegeldrehachse eine Parkposition des Konkavspiegels einstellbar, bei der ein Fokus oder eine optische Hauptachse des Konkavspiegels außerhalb eines für den Betrieb der Projektionseinheit vorgesehenen Strahlengangs liegt. Bei dieser Ausführungsform ist die Spiegeldrehachse derart in dem Sekundärlager gelagert, dass bei der Verstellung des Konkavspiegels aus einer Betriebsposition in seine Parkposition die mit der hierzu benötigten Drehung der Spiegeldrehachse verbundene Drehung des Sekundärlagers in einer überlagerten Translationsbewegung der Spiegeldrehachse und damit des Konkavspiegels in einer Richtung von der Deckscheibe weg resultiert. Bei einer in der Instrumententafel eines Fahrzeugs verbauten Projektionseinheit entspricht das einer (zumindest einseitigen, d. h. an einem ihrer Enden eintretenden) Absenkung der Spiegeldrehachse in Höhenrichtung des Fahrzeugs. Einige Beispiele für hierzu geeignete Positionen des Primärlagers und des Mitnehmers in dem Sekundärlager sind beispielsweise in den Figuren 2a-4b gezeigt.

Gemäß einer Ausführungsform ist der mindestens eine Mitnehmer derart mit dem Sekundärlager verbunden oder greift derart in eine/einen am Sekundärlager ausgebildete(n) Ausnehmung oder Öffnung oder Vorsprung ein, dass das Sekundärlager von dem mindestens einen Mitnehmer bei jeder Drehung der Spiegeldrehachse zu einer zugehörigen Drehung um dessen Exzenterachse angetrieben wird. Bei dieser Ausführungsform lässt sich die überlagerte Translationsbewegung der Spiegeldrehachse durch eine geeignete Wahl der gegenseitigen Anordnung der Spiegeldrehachse und der Exzenterachse sowie der Mitnehmer zu einer Optimierung der Konkavspiegelverstellung sowohl im Betrieb der Projektionseinheit als auch bei der Einstellung der oben genannten Parkposition einsetzen.

Bei einer hierzu alternativen Ausführungsform weist das Sekundärlager für jeden Mitnehmer eine sich um das darin gelagerte Primärlager der Spiegeldrehachse herum in einem vorbestimmten Winkelsegment erstreckende Mitnehmer-Nut oder -Kulisse auf. Dabei ist die jeweilige Mitnehmer-Nut oder - Kulisse so ausgebildet, dass der zugehörige Mitnehmer sich darin bei Drehungen der Spiegeldrehachse, die im Betrieb der Projektionseinheit zu Eyebox-Anpassungen nötig sind, frei bewegt und beim darüberhinausgehenden Drehen der Spiegeldrehachse, das zum Einstellen der Parkposition des Konkavspiegels nötig ist, an einem Ende der Mitnehmer-Nut bzw. -Kulisse anschlägt und dadurch das Sekundärlager um dessen Exzenterachse dreht. Hier kann das Sekundärlager beispielsweise dazu ausgelegt werden, eine größtmögliche Bauraumoptimierung bei der Parkposition zu erreichen, ohne die Spiegelverstellung im Betrieb dabei zu beeinflussen.

Die Spiegeldrehachse und die Exzenterachse können beispielsweise in etwa parallel zueinander mit einem vorbestimmten Achsabstand voneinander angeordnet sein. Alternativ dazu können die Spiegeldrehachse und die Exzenterachse aber auch zueinander verschränkt angeordnet sein, insbesondere mit einem vorbestimmten Mindestabstand voneinander, sodass die beiden Achsen sich nicht kreuzen. Insbesondere können die Exzenterachse und eine orthogonale Projektion der Spiegeldrehachse auf eine Ebene, in der die Exzenterachse liegt, einen (bei der Drehung variierenden) spitzen Winkel zueinander bilden, der deutlich unter 90° liegt und beispielsweise stets weniger als 80°, als 70°, als 60°, als 50°, als 40°, als 30° oder als 20° beträgt.

Bei einer spezifischen Ausgestaltung ist/sind die Spiegeldrehachse und/oder deren Primärlager und/oder Sekundärlager mit einer automatischen Achslängenanpassung ausgebildet, sodass sich eine Länge der Spiegeldrehachse bei der Drehung des Sekundärlagers automatisch an einen dadurch gegebenenfalls variierenden Abstand zwischen den Primärlagern ihrer beiden Enden anpasst. Beispielsweise kann hierzu ein längenausgleichender Federmechanismus an einem oder an beiden Enden der Spiegeldrehachse vorgesehen sein oder die Spiegeldrehachse als eine Profilwelle und/oder als eine Teleskopstange aus mindestens zwei koaxial aufeinander geschobenen Stangenabschnitten aufgebaut sein, die wiederum durch einen geeigneten Federmechanismus bis zu der jeweils verfügbaren Achslänge auseinandergedrückt werden.

Gemäß einem weiteren Aspekt ist eine Blickfeldanzeigevorrichtung, insbesondere zum Einsatz in einem Fahrzeug, vorgesehen. Die Blickfeldanzeigevorrichtung umfasst neben der hierin vorgestellten Projektionseinheit auch eine im Strahlengang des von der Projektionseinheit ausgegebenen Lichtstrahlenbündels angeordnete, insbesondere zumindest teilweise transparente, Reflexionsscheibe, die insbesondere als Teilflächenabschnitt einer Frontscheibe oder einer anderen Fahrzeugscheibe des Fahrzeugs oder als eine extra vorgesehene Combinerscheibe ausgebildet sein kann. Dabei ist die Reflexionsscheibe derart im Blickfeld eines Benutzers, beispielsweise eines Fahrers oder eines anderen Insassen des Fahrzeugs, angeordnet und ausgebildet, dass sie das Lichtstrahlenbündel zu einer für den Benutzer vorbestimmten Eyebox reflektiert, wodurch ihm der Anzeigeinhalt in Form eines virtuellen Bilds hinter der Reflexionsscheibe darstellbar ist und im Betrieb der Blickfeldanzeigevorrichtung auch dargestellt wird.

Gemäß einem weiteren Aspekt ist ein Fahrzeug, insbesondere ein Kraftfahrzeug oder ein beliebiges anderes Land-, Luft- oder Wasserfahrzeug vorgesehen. Die hierin verwendeten räumlichen Orientierungsbegriffe wie "oberhalb", "unterhalb", "vor", "seitlich", "horizontal", "vertikal" etc. beziehen sich dabei auf das übliche fahrzeugfeste kartesische Koordinatensystem mit zueinander senkrechten Längs-, Quer- und Höhenrichtungen des Fahrzeugs.

Das Fahrzeug besitzt eine Fahrzeugscheibe, die einen Insassenraum zumindest teilweise begrenzt, insbesondere eine Frontscheibe, und ist mit der obigen Blickfeldanzeigevorrichtung ausgestattet, deren Projektionseinheit im Insassenraum angeordnet und deren Reflexionsscheibe als ein Abschnitt der Fahrzeugscheibe oder als eine im Insassenraum angeordnete Combinerscheibe ausgebildet ist. Beispielsweise kann die Projektionseinheit direkt unterhalb einer Oberseite einer Instrumententafel des Fahrzeugs verbaut sein, derart dass das Lichtstrahlenbündel von der Projektionseinheit auf eine über der Instrumententafel angeordnete Frontscheibe oder eine davor im Blickfeld des Fahrers oder eines anderen Insassen positionierte Combinerscheibe geworfen wird.

Dabei umfasst die aus der Drehung des Sekundärlagers resultierende Translationsbewegung der Spiegeldrehachse deren ein- oder beidseitige Absenkung oder Anhebung in der Höhenrichtung des fahrzeugfesten kartesischen Koordinatensystems.

Gemäß einer Ausführungsform ist in der Projektionseinheit durch eine vorbestimmte Winkelstellung der Spiegeldrehachse die oben genannte Parkposition des Konkavspiegels einstellbar. Dabei ist für einen vorbestimmten Betriebs-Winkelbereich der Spiegeldrehachse, der zu Eyebox-Anpassungen im Betrieb der Projektionseinheit benötigt wird, eine elektromechanische oder mechanische Fixierung der Lagerung der Spiegeldrehachse im Primärlager vorgesehen, die dazu ausgebildet ist, im Fahrbetrieb des Fahrzeugs durch Fahrzeugbewegungen bedingte Schwingungen des Konkavspiegels zu unterdrücken. Dabei ist die Projektionseinheit dazu ausgebildet, diese Fixierung nach Verlassen des Betriebs-Winkelbereichs der Spiegeldrehachse zur Verstellung des Konkavspiegels in die Parkposition automatisch zu öffnen, d. h. aufzuheben.

Die obigen Aspekte der Erfindung und deren Ausführungsformen und spezifische Ausgestaltungen werden nachfolgend anhand von in den beigefügten Zeichnungen dargestellten Beispielen näher erläutert. Die Zeichnungen sind schematische Illustrationen und sind daher nicht als maßstabsgetreu zu verstehen. Es zeigen:
- Figur 1: einen vertikalen Längsschnitt eines Ausschnitts eines Kraftfahrzeugs mit einer Blickfeldanzeigevorrichtung gemäß einem Ausführungsbeispiel der Erfindung;
- Figur 2a: eine Querschnittsansicht eines Beispiels einer exzentrischen Lagerung der Spiegeldrehachse des Konkavspiegels der Blickfeldanzeigevorrichtung der Fig. 1 in einem drehbaren Sekundärlager, mit Blick in Richtung der Spiegeldrehachse bei einer Betriebsposition des Konkavspiegels;
- Figur 2b: die gleiche Querschnittsansicht wie in Fig. 2a, diesmal jedoch bei einer Parkposition des Konkavspiegels;
- Figur 3a: einen Längsschnitt des Konkavspiegels der Fig. 2a und seiner exzentrischen Lagerung in dem drehbaren Sekundärlager mit Blick auf die Spiegeldrehachse, in derselben Betriebsposition des Konkavspiegels wie in Fig. 2a;
- Figur 3b: die gleiche Längsschnittansicht wie in Fig. 3a, diesmal jedoch bei der Parkposition des Konkavspiegels wie in Fig. 2b;
- Figur 4a: eine Querschnittsansicht eines weiteren Beispiels einer exzentrischen Lagerung der Spiegeldrehachse des Konkavspiegels der Blickfeldanzeigevorrichtung der Fig. 1 in einem drehbaren Sekundärlager, mit Blick in Richtung der Spiegeldrehachse bei einer Betriebsposition des Konkavspiegels; und
- Figur 4b: die gleiche Querschnittsansicht wie in Fig. 4a, diesmal jedoch bei einer Parkposition des Konkavspiegels.

Alle weiter oben in der Beschreibung und in den nachfolgenden Ansprüchen erwähnten verschiedenen Ausführungsformen, Varianten und spezifischen Ausgestaltungsmerkmale der Projektionseinheit, der Blickfeldanzeigevorrichtung und des Fahrzeugs gemäß den obigen Aspekten der Erfindung können bei den in den Figuren 1 bis 4b gezeigten Beispielen, insbesondere auch alternativ oder zusätzlich zu den darin gezeigten Merkmalen, implementiert sein. Sie werden daher nachfolgend nicht alle nochmals wiederholt. Das Gleiche gilt entsprechend für die weiter oben bereits angegebenen Begriffsdefinitionen und Wirkungen in Bezug auf einzelne Merkmale, die in den Fig. 1-4b gezeigt sind.

Fig. 1 zeigt in einem vertikalen Längsschnitt einen Ausschnitt eines Fahrzeugs 1 mit einer Blickfeldanzeigevorrichtung 2 gemäß einem Ausführungsbeispiel der Erfindung. Die Blickfeldanzeigevorrichtung 2 ist hier rein beispielhaft als ein Head-up-Display (HUD) ausgebildet. Bei der Beschreibung von diesem und den weiteren Beispielen verwendete räumliche Orientierungsbegriffe wie "horizontal", "vertikal", "oberhalb", "unterhalb", "vorn", "hinten", "seitlich" etc. beziehen sich auf das übliche fahrzeugfeste kartesische Koordinatensystem K mit zueinander senkrechten Längs-, Quer- und Höhenrichtungen X, Y und Z des Fahrzeugs 1.

Die Blickfeldanzeigevorrichtung 2 ist zur Erzeugung eines virtuellen Bilds V im Blickfeld eines Benutzers ausgebildet, beispielsweise eines Fahrers des Fahrzeugs 1, der in Fig. 1 nur durch eine für seine Augen bestimmte Eyebox E im Insassenraum des Fahrzeugs 1 angedeutet ist. In diesem Beispiel ist die Eyebox E als ein zweidimensionaler Raumbereich senkrecht zu einem Mittenstrahl der Blickfeldanzeigevorrichtung 2 definiert, aus welchem Raumbereich das virtuelle Bild V in vorgesehener Darstellungsqualität sichtbar ist. Das Fahrzeug 1 ist hier rein beispielhaft ein Kraftfahrzeug. Es ist in Fig. 1 allein durch seine Frontscheibe 3, eine sich darunter erstreckende und nicht näher dargestellte Instrumententafel 4 sowie einen sich darüber erstreckenden Dachhimmel 9 angedeutet.

Die Blickfeldanzeigevorrichtung 2 umfasst eine Projektionseinheit 5, die in diesem Beispiel unterhalb der Frontscheibe 3 im Inneren der Instrumententafel 4 angeordnet ist und nach außen durch ein Gehäuse 10 vor etwaigen Störeinflüssen wie Staub und Feuchtigkeit etc. geschützt ist. Die Projektionseinheit 5 enthält eine zur Erzeugung eines Lichtstrahlenbündels L mit gewünschtem Anzeigeinhalt ausgebildete bildgebende Einheit 6. Das von der bildgebenden Einheit 6 ausgehende Lichtstrahlenbündel L ist vereinfacht durch den oben erwähnten Mittenstrahl der Blickfeldanzeigevorrichtung 2 angedeutet, der wie üblich etwa aus einer Mitte der bildgebenden Einheit 6 in eine Mitte der Eyebox E führt.

Im Strahlengang des erzeugten Lichtstrahlenbündels L ist in diesem Beispiel ein optionaler Faltspiegel 7 (der bei der vorliegenden Erfindung auch weggelassen werden kann) zur zusätzlichen Faltung des Strahlengangs und diesem gegenüber ein Konkavspiegel 8 angeordnet. Die konkav gekrümmte Vorderseite des Konkavspiegels 8, die dem Faltspiegel 7 (und ohne diesen der bildgebenden Einheit 6) zugewandt ist, ist dabei als eine Freiformfläche dazu ausgebildet, dass das Lichtstrahlenbündel L durch Reflexion daran die Projektionseinheit 5 in einer geeigneten Form und Richtung verlässt, um anschließend von der Frontscheibe 3 zur Eyebox E reflektiert zu werden. Die Frontscheibe 3 dient somit als hierin genannte Reflexionsfläche der Blickfeldanzeigevorrichtung 2.

Das Gehäuse 10 der Projektionseinheit 5 ist zur Frontscheibe 3 hin durch eine für das erzeugte Lichtstrahlenbündel L transparente Deckscheibe 11 verschlossen, die in diesem Beispiel sowohl zum mechanischen Schutz der Projektionseinheit 5 als auch zu deren Schutz vor störenden Sonnen- und Umgebungslichtreflexen ausgelegt ist. Dabei liegt die Deckscheibe 11 in diesem Beispiel etwas tiefer als eine angrenzende Oberseite O der Instrumententafel 4 und besitzt eine konkav gekrümmte Außenoberfläche zur weiter oben erwähnten geometrischen Entspiegelung. Letzteres erfordert eine in Fig. 1 erkennbare beträchtliche Gesamtabmessung der Deckscheibe 11 in Höhenrichtung Z des Fahrzeugs 1.

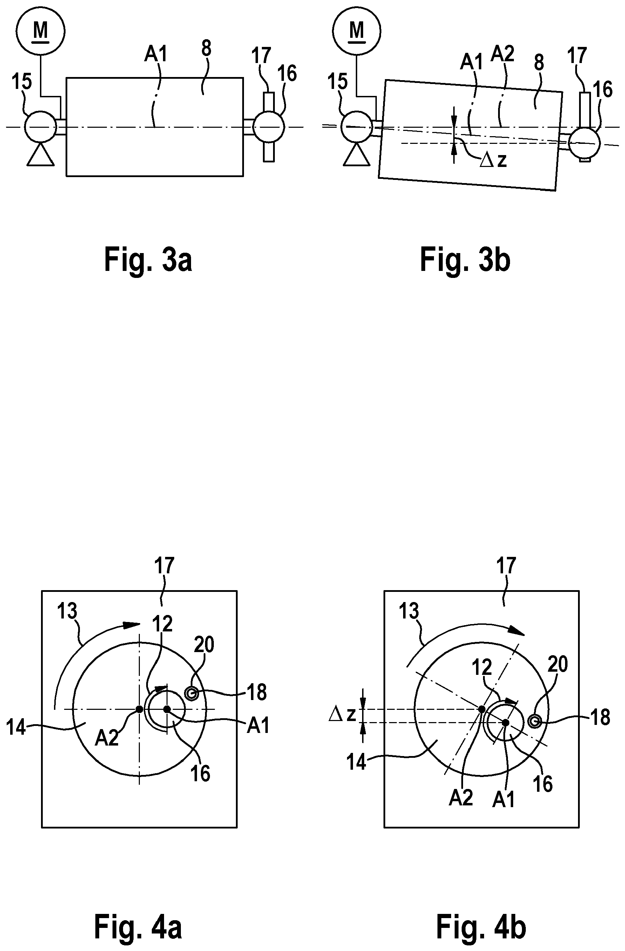

Der Konkavspiegel 8 ist zur Anpassung der Position der Eyebox E an verschiedene Benutzergrößen und -Sitzpositionen um eine fest mit ihm verbundene Spiegeldrehachse A1 durch einen Antrieb M (siehe Fig. 3a) rotierbar. Dabei ist durch eine vorbestimmte Winkelstellung der Spiegeldrehachse A1 auch eine Parkposition P des Konkavspiegels 8 einstellbar, bei der ein Fokus oder eine optische Hauptachse des Konkavspiegels 8 außerhalb des für den Betrieb der Projektionseinheit 5 vorgesehenen Strahlengangs liegt. Die Drehung 12 der Spiegeldrehachse A1 bei der Verstellung des Konkavspiegels 8 aus einer beispielhaft dargestellten Betriebsposition in seine Parkposition P ist in Fig. 1 durch einen Drehpfeil angedeutet.

Wie in Fig. 1 erkennbar, hat der Konkavspiegel 8 in seiner Parkposition P seine höchste Auslenkung in Höhenrichtung Z des Fahrzeugs 1 und beeinflusst damit die Auslegung der darüber liegenden Deckscheibe 11, für die ein vorbestimmter Mindestabstand zum Konkavspiegel 8 eingehalten werden muss. Dies hat wiederum einen direkten beschränkenden Einfluss auf das Design der Instrumententafel 4 und andere technische Komponenten des Fahrzeugs 1 in der Umgebung der Blickfeldanzeigevorrichtung 2. Zur Lösung dieses Problems wird der Konkavspiegel 8 in diesem Ausführungsbeispiel nicht wie üblich durch eine reine Rotationsbewegung um seine Spiegeldrehachse A1, sondern durch eine zusätzliche Absenk-Kinematik mittels eines Exzenters in Parkposition P gebracht, wie in Fig. 2a-4b an einigen Beispielen veranschaulicht.

Fig. 2a zeigt ein Beispiel einer exzentrischen Lagerung der Spiegeldrehachse A1 eines Konkavspiegels 8 einer Blickfeldanzeigevorrichtung gemäß einem Ausführungsbeispiel der Erfindung in einem drehbaren Sekundärlager 14. Es kann sich insbesondere um die Blickfeldanzeigevorrichtung 2 der Fig. 1 handeln. Dargestellt ist eine Querschnittsansicht mit Blick in Richtung der Spiegeldrehachse A1, wenn sich der Konkavspiegel 8 in einer Betriebsposition (beispielsweise wie in Fig. 1) befindet. Fig. 2b zeigt die gleiche Querschnittsansicht wie in Fig. 2a, nachdem der Konkavspiegel 8 in seine Parkposition P (beispielsweise wie in Fig. 1) verstellt wurde.

Fig. 3a zeigt eine Längsschnittansicht des Konkavspiegels 8 der Fig. 2a und seiner exzentrischen Lagerung in dem drehbaren Sekundärlager 14 mit Blick auf die Spiegeldrehachse A1, in derselben Betriebsposition des Konkavspiegels 8 wie in Fig. 2a. Mit anderen Worten zeigt die Ansicht der Fig. 3a den Konkavspiegel 8 sozusagen aus einer Fahrersichtperspektive, d. h. aus einer Blickrichtung in Längsrichtung X des Fahrzeugs 1. Fig. 3b zeigt die gleiche Längsschnittansicht wie in Fig. 3a, nachdem der Konkavspiegel 8 wie in Fig. 2b in seine Parkposition P verstellt wurde.

In demjenigen Betriebs-Winkelbereich der Spiegeldrehachse A1, der während des Betriebs der Projektionseinheit 5 zur Eyebox-Anpassung genutzt wird, ist der Freigang zwischen der Deckscheibe 11 und dem Konkavspiegel 8 am größten. Im darüberhinausgehenden Winkelbereich, der zur Verstellung des Konkavspiegels 8 in die Parkposition P benutzt wird, würde (ohne eine zusätzliche Absenk-Kinematik) aufgrund der unsymmetrischen Frontscheiben- und Fahrzeuggeometrie aus Fahrersicht insbesondere das in Fig. 3a-3b rechte Ende der Spiegeldrehachse A1 zu nah an die in Fig. 1 dargestellte Deckscheibe 11 mit einer gewünschten Entspiegelungsgeometrie gelangen. Zur Lösung dieses Problems sieht das in Fig. 2a-2b und 3a-3b vorgestellte Konzept daher vor, den Konkavspiegel 8 lediglich bei der Verstellung des Konkavspiegels 8 in die Parkposition P und rein beispielhaft nur einseitig, d. h. an dem genannten rechten Ende der Spiegeldrehachse A1 (beidseitig ebenfalls möglich) durch eine geeignete Exzenter-Kinematik im Bereich der Engstelle zur Deckscheibe 11 in die Parkposition P abzusenken.

Wie in Fig. 3a gezeigt, ist hierzu in diesem Beispiel ein Primärlager 15, in dem die Spiegeldrehachse A1 mit ihrem linken Ende drehbar gelagert ist, als eine Festlagerung ausgebildet, deren Fixierung bezüglich der Projektionseinheit 5 bzw. im Gehäuse 10 durch eine dreieckige Befestigungseinrichtung angedeutet ist. Daher eignet sich diese Lagerstelle insbesondere auch zur Anbindung des mechanischen Antriebs M für die Spiegeldrehachse A1; dies ist jedoch keineswegs zwingend. Das Primärlager 15 ist beispielsweise als ein Kugelkopf ausgeführt, um der gegenüberliegenden Lagerstelle am zweiten Ende der Spiegeldrehachse A1 die notwendigen Freiheitsgerade der Bewegung zu geben. Bei der gegenüberliegenden Lagerstelle, die als eine Loslagerung ausgeführt ist, kann das Primärlager 16, in dem das rechte Ende der Spiegeldrehachse A1 drehbar gelagert ist, ebenfalls mit Kugelkopf ausgeführt werden. Über die beiden Primärlager 15 und 16 erfolgt in diesem Beispiel die Verstellung des Konkavspiegels 8 für den normalen Betrieb der Blickfeldanzeigevorrichtung 2, d. h. insbesondere zur Anpassung der Eyebox-Position, die beispielsweise im Fahrbetrieb des Fahrzeugs 1 ausgeführt wird.

Das Primärlager 16 ist dabei exzentrisch in das Sekundärlager 14 (Exzenter) implementiert, indem es darin an einer festen Position in einem vorbestimmten Abstand von der Exzenterachse A2 befestigt oder gelagert, beispielsweise gleit- oder wälzgelagert, ist. Das Sekundärlager 14 ist um seine Exzenterachse A2, die in der Projektionseinheit 5 bzw. deren Gehäuse 10 fixiert ist, drehbar. Hierzu ist das Sekundärlager 14 drehbar in einem bezüglich der Projektionseinheit 5 bzw. deren Gehäuse 10 feststehenden Lagerbock 17 gelagert, der hier rein beispielhaft als rechteckig ausgeführt oder angedeutet ist. Das Sekundärlager 14 wird in diesem Beispiel über mindestens einen Mitnehmer 18 (rein beispielhaft nur einer dargestellt) zur Drehung 13 angetrieben, wobei der Mitnehmer 18 mit der Spiegeldrehachse A1 fest verbunden ist und daher mitrotiert.

Für die Verstellung des Konkavspiegels 8 im Betrieb, beispielsweise zur Eyebox-Anpassung im oder für den Fahrbetrieb des Fahrzeugs 1, bewegt sich der Mitnehmer 18 in Fig. 2a frei in einer Mitnehmer-Kulisse 19, die im Sekundärlager 14 ausgebildet ist und sich um die Spiegeldrehachse A1 über ein Winkelsegment erstreckt, das dem oben genannten Betriebs-Winkelbereich der Spiegeldrehachse A1 entspricht. Mit anderen Worten bewegt sich der Mitnehmer 18 dabei frei in der Kulisse 19, ohne das Sekundärlager 14 zu seiner Drehung um die Exzenterachse A2 mitanzutreiben.

Wenn der Bereich dieser Betriebs-Verstellung des Konkavspiegels 8 überschritten ist, schlägt der Mitnehmer 18 am Ende der Kulisse 19 an, wie in Fig. 2a und 2b gezeigt. Durch darüberhinausgehende Drehung 12 der Spiegeldrehachse A1 wird der Konkavspiegel 8 in seine Parkposition P gebracht, wobei auch das Sekundärlager 14 über den mindestens einen Mitnehmer 18 (besser 2 Mitnehmer mit 2 zugehörigen Kulissen) zu einer Drehung 13 um seine Exzenterachse A1 angetrieben wird. Hierdurch wird der Konkavspiegel 8 in Höhenrichtung Z des Fahrzeugs 1 abgesenkt, und der Abstand zwischen dem Konkavspiegel 8 und der Deckscheibe 11 vergrößert sich in diesem Beispiel um einen Höhenbetrag ΔZ, der von der spezifischen Position des Primärlagers 16 im Sekundärlager 14 und seinem Abstand von der Exzenterachse A2 abhängt. Diese Absenkung ΔZ ist auch in Fig. 3a-3b gezeigt. Eine zweiseitige Absenkung, d. h. auch für das Primärlager 15, ist in ähnlicher Weise umsetzbar.

Fig. 4a und 4b zeigen eine Weiterbildung des in Fig. 2a-3b gezeigten Ausführungsbeispiels, bei dem die exzentrisch angetriebene Absenkung oder Anhebung des Konkavspiegels 8 in einer zu seiner Spiegeldrehachse A1 transversalen Richtung alternativ oder zusätzlich auch für die Konkavspiegelverstellung im Betrieb, insbesondere für die Eyebox-Anpassung, genutzt wird. Hierzu ist in diesem Beispiel anstelle einer länglichen Mitnehmer-Kulisse 19 eine Mitnehmer-Öffnung 20 in dem Sekundärlager 14 vorgesehen, in die der mindestens eine Mitnehmer 18 eingreift und deren Innendurchmesser in etwa dem Außendurchmesser des Mitnehmers 18 entspricht. Dadurch wird erzielt, dass das Sekundärlager 14 bei jeder Drehung 12 der Spiegeldrehachse A1 zu seiner Drehung 13 um die Exzenterachse A2 angetrieben wird, was als zusätzliche Translationsfreiheitsgrade bei der Konkavspiegelverstellung nutzbar ist. Dies kann durch eine geeignete Wahl der geometrischen Parameter der exzentrischen Lagerung der Spiegeldrehachse A1 im Sekundärlager 14 zur zusätzlichen Optimierung der optischen Performance der Blickfeldanzeigevorrichtung 2 im Betrieb und/oder zur besseren Ausnutzung der effektiven Konkavspiegelfläche bei der Eyebox-Anpassung, d. h. zur Reduzierung der benötigten Konkavspiegelgröße, und vielem mehr eingesetzt werden, zusätzlich zu der oben beschriebenen Absenkung in die Parkposition P. Im Übrigen gilt alles weiter oben mit Bezug auf Fig. 2a-3b Ausgeführte dabei sinngemäß.

In Abhängigkeit vom Durchmesser der Lagerung der Spiegeldrehachse A1 im Sekundärlager 14 und einem Abstand des Mitnehmers 18 zur Spiegeldrehachse A1 kann die überlagerte translatorische Bewegung der Spiegeldrehachse A1 bei deren Rotation an gewünschte Auslegungsparameter (wie die optische Performance der Blickfeldanzeigevorrichtung 2, Bauraumrestriktionen etc.) spezifisch angepasst werden. Auch hier kann durch die dargestellte exzentrische Lagerung der Spiegeldrehachse A1 der Konkavspiegel 8 in Z-Richtung zum Erreichen seiner Parkposition P im Vergleich zur konventionellen Lagerung deutlich tiefer abgesenkt werden.

### Bezugszeichenliste

- 1: Fahrzeug
- 2: Blickfeldanzeigevorrichtung
- 3: Frontscheibe
- 4: Instrumententafel
- 5: Projektionseinheit
- 6: bildgebende Einheit
- 7: Faltspiegel
- 8: Konkavspiegel
- 9: Dachhimmel
- 10: Gehäuse
- 11: Deckscheibe
- 12: Drehung der Spiegeldrehachse
- 13: Drehung des Sekundärlagers
- 14: Sekundärlager
- 15, 16: Primärlager für gegenüberliegende Enden der Spiegeldrehachse
- 17: Lagerbock
- 18: Mitnehmer
- 19: Mitnehmer-Kulisse oder -Nut
- 20: Mitnehmer-Öffnung
- L: Lichtstrahlenbündel
- O: Oberseite der Instrumententafel
- A1: Spiegeldrehachse
- A2: Exzenterachse
- E: Eyebox
- M: Antrieb der Spiegeldrehachse
- P: Parkposition des Konkavspiegels
- K: fahrzeugfestes Koordinatensystem
- X, Y, Z: Längs-, Quer- und Höhenrichtungen des Fahrzeugs
- V: virtuelles Bild

## Patentansprüche

1. Projektionseinheit (5) für eine Blickfeldanzeigevorrichtung (2), insbesondere zum Einsatz in einem Fahrzeug (1), umfassend:
- eine zur Erzeugung eines Lichtstrahlenbündels (L) mit gewünschtem Anzeigeinhalt ausgebildete bildgebende Einheit (6);
- einen im Strahlengang des erzeugten Lichtstrahlenbündels (L) derart angeordneten und ausgebildeten Konkavspiegel (8), dass das Lichtstrahlenbündel (L) die Projektionseinheit (5) in einer vorbestimmten Form und Richtung verlässt, um anschließend von einer im Blickfeld eines Benutzers angeordneten teiltransparenten Reflexionsscheibe zu seiner Eyebox (E) reflektiert zu werden und dem Benutzer dadurch den Anzeigeinhalt in Form eines virtuellen Bilds (V) hinter der Reflexionsscheibe darzustellen;
- wobei zur Anpassung der Eyebox-Position der Konkavspiegel (8) um eine fest mit ihm verbundene Spiegeldrehachse (A1) durch einen Antrieb (M) rotierbar ist, die hierzu in einem Primärlager (16) drehbar gelagert ist;
- **dadurch gekennzeichnet, dass** das Primärlager (16) zumindest an einem Ende der Spiegeldrehachse (A1) exzentrisch in einem Sekundärlager (14) gelagert ist, das zu einer Drehung (13) um seine bezüglich der Projektionseinheit (5) fixierte Exzenterachse (A2) mittels mindestens eines mit der Spiegeldrehachse (A1) mitrotierenden Mitnehmers (18) antreibbar ist, was eine überlagerte Translationsbewegung der Spiegeldrehachse (A1) und damit des Konkavspiegels (8) in einer zu ihr transversalen Richtung bewirkt.

2. Projektionseinheit (5) nach Anspruch 1, wobei
- das Primärlager (15, 16) an einem oder an beiden Enden der Spiegeldrehachse (A1) als ein Kugelkopf ausgebildet ist; und/oder
- das Primärlager (16) im Sekundärlager (14) ortsfest, insbesondere an einem am Sekundärlager (14) fixierten Punkt in einem vorbestimmten radialen Abstand von der Exzenterachse (A2), gelagert, insbesondere gleit- oder wälzgelagert, ist.

3. Projektionseinheit (5) nach Anspruch 1 oder 2, ferner umfassend:
- ein die Projektionseinheit (5) nach außen schützendes Gehäuse (10); und
- eine transparente Deckscheibe (11), die das Gehäuse (10) ausgangsseitig verschließt und das von der Projektionseinheit (5) ausgegebene Lichtstrahlenbündel (L) transmittiert;
- wobei durch eine vorbestimmte Winkelstellung der Spiegeldrehachse (A1) eine Parkposition (P) des Konkavspiegels (8) einstellbar ist, bei der ein Fokus oder eine optische Hauptachse des Konkavspiegels (8) außerhalb eines für den Betrieb der Projektionseinheit (5) vorgesehenen Strahlengangs liegt; und
- bei der Verstellung des Konkavspiegels (8) aus einer Betriebsposition in seine Parkposition (P) die mit der hierzu benötigten Drehung (12) der Spiegeldrehachse (A1) verbundene Drehung (13) des Sekundärlagers (14) in einer überlagerten Translationsbewegung der Spiegeldrehachse (A1) und damit des Konkavspiegels (8) in einer Richtung von der Deckscheibe (11) weg resultiert.

4. Projektionseinheit (5) nach Anspruch 3, wobei
- der mindestens eine Mitnehmer (18) derart mit dem Sekundärlager (14) verbunden ist oder in eine/einen am Sekundärlager (14) ausgebildete(n) Öffnung (20) oder Vorsprung eingreift, dass das Sekundärlager (14) von dem mindestens einen Mitnehmer (18) bei jeder Drehung (12) der Spiegeldrehachse (A1) zu einer zugehörigen Drehung (13) um dessen Exzenterachse (A2) angetrieben wird.

5. Projektionseinheit (5) nach Anspruch 3, wobei
- das Sekundärlager (14) für jeden Mitnehmer (18) eine sich um das Primärlager (16) der Spiegeldrehachse (A1) herum in einem vorbestimmten Winkelsegment erstreckende Mitnehmer-Nut oder -Kulisse (19) aufweist; und
- die jeweilige Mitnehmer-Nut oder -Kulisse (19) so ausgebildet ist, dass der zugehörige Mitnehmer (18) sich darin bei Drehungen der Spiegeldrehachse (A1), die im Betrieb der Projektionseinheit (5) zu Eyebox-Anpassungen nötig sind, frei bewegt und beim darüberhinausgehenden Drehen (12) der Spiegeldrehachse (A1), das zum Einstellen der Parkposition (P) des Konkavspiegels (8) nötig ist, an einem Ende der Mitnehmer-Nut bzw. -Kulisse (19) anschlägt und dadurch das Sekundärlager (14) um dessen Exzenterachse (A2) dreht.

6. Projektionseinheit (5) nach einem der vorhergehenden Ansprüche, wobei
- die Spiegeldrehachse (A1) und die Exzenterachse (A2) parallel zueinander mit einem vorbestimmten Achsabstand voneinander angeordnet sind; oder
- die Spiegeldrehachse (A1) und die Exzenterachse (A2) zueinander verschränkt angeordnet sind.

7. Projektionseinheit (5) nach einem der vorhergehenden Ansprüche, wobei
- die Spiegeldrehachse (A1) und/oder deren Primärlager (15, 16) und/oder Sekundärlager (14) mit einer automatischen Achslängenanpassung ausgebildet ist/sind, sodass sich eine Länge der Spiegeldrehachse (A1) bei der Drehung (13) des Sekundärlagers (14) automatisch an einen dadurch gegebenenfalls variierenden Abstand zwischen den Primärlagern (15, 16) ihrer beiden Enden anpasst.

8. Blickfeldanzeigevorrichtung (2), insbesondere zum Einsatz in einem Fahrzeug (1), umfassend:
- eine Projektionseinheit (5) nach einem der vorhergehenden Ansprüche; und
- eine im Strahlengang des von der Projektionseinheit (5) ausgegebenen Lichtstrahlenbündels (L) angeordnete, insbesondere zumindest teilweise transparente, Reflexionsscheibe;
- wobei die Reflexionsscheibe derart im Blickfeld eines Benutzers angeordnet und ausgebildet ist, dass sie das Lichtstrahlenbündel (L) zu einer für den Benutzer vorbestimmten Eyebox (E) reflektiert, wodurch ihm der Anzeigeinhalt in Form eines virtuellen Bilds (V) hinter der Reflexionsscheibe darstellbar ist.

9. Fahrzeug (1), insbesondere ein Kraftfahrzeug, mit zueinander senkrechten Längs-, Quer- und Höhenrichtungen (X, Y, Z) eines fahrzeugfesten kartesischen Koordinatensystems (K), umfassend:
- eine Fahrzeugscheibe, die einen Insassenraum zumindest teilweise begrenzt, insbesondere eine Frontscheibe (3); sowie
- eine Blickfeldanzeigevorrichtung (2) nach Anspruch 8, deren Projektionseinheit (5) im Insassenraum, insbesondere im Inneren einer unter der Frontscheibe (3) angeordneten Instrumententafel (4) oder direkt unterhalb von deren Oberseite (O), angeordnet ist und deren Reflexionsscheibe als ein Abschnitt der Fahrzeugscheibe oder als eine im Insassenraum angeordnete Combinerscheibe ausgebildet ist;
- wobei die aus der Drehung (13) des Sekundärlagers (14) resultierende Translationsbewegung der Spiegeldrehachse (A1) deren ein- oder beidseitige Absenkung (ΔZ) oder Anhebung in der Höhenrichtung (Z) des fahrzeugfesten kartesischen Koordinatensystems (K) umfasst.

10. Fahrzeug (1) nach Anspruch 9, wobei
- in der Projektionseinheit (5) durch eine vorbestimmte Winkelstellung der Spiegeldrehachse (A1) eine Parkposition (P) des Konkavspiegels (8) einstellbar ist, bei der ein Fokus oder eine optische Hauptachse des Konkavspiegels (8) außerhalb eines für den Betrieb der Projektionseinheit (5) vorgesehenen Strahlengangs liegt;
- für einen vorbestimmten Betriebs-Winkelbereich der Spiegeldrehachse (A1), der zu Eyebox-Anpassungen im Betrieb der Projektionseinheit (5) benötigt wird, eine elektromechanische oder mechanische Fixierung der Lagerung der Spiegeldrehachse (A1) im Primärlager (15, 16) vorgesehen ist, die dazu ausgebildet ist, im Fahrbetrieb des Fahrzeugs (1) durch Fahrzeugbewegungen bedingte Schwingungen des Konkavspiegels (8) zu unterdrücken; und
- die Projektionseinheit (5) dazu ausgebildet ist, diese Fixierung nach Verlassen des Betriebs-Winkelbereich der Spiegeldrehachse (A1) zur Verstellung des Konkavspiegels (8) in die Parkposition (P) automatisch zu öffnen.

## Claims

1. Projection unit (5) for a field-of-view display device (2), in particular for use in a vehicle (1), comprising:
- a picture generating unit (6) configured to generate a light beam (L) with desired display content;
- a concave mirror (8) arranged in the beam path of the generated light beam (L) and configured such that the light beam (L) leaves the projection unit (5) with a predetermined shape and in a predetermined direction in order subsequently to be reflected by a partially transparent reflective pane to the eyebox (E) of a user, the partially transparent reflective pane being arranged in the field of view of this user, and in order to thereby present the display content, in the form of a virtual image (V) behind the reflective pane, to the user;
- wherein, in order to adapt the eyebox position, the concave mirror (8) is rotatable about a mirror rotation shaft (A1), fixed relative thereto and rotatably mounted in a primary bearing (16), by means of a drive (M);
- **characterized in that** at least at one end of the mirror rotation shaft (A1), the primary bearing (16) is mounted eccentrically in a secondary bearing (14) that can be driven to undergo a rotation (13) about its eccentric axis (A2), which is fixed relative to the projection unit (5), by means of at least one driving member (18) corotating with the mirror rotation shaft (A1), thereby causing a superimposed translational movement of the mirror rotation shaft (A1) and hence the concave mirror (8) in a direction transverse thereto.

2. Projection unit (5) according to Claim 1, wherein
- the primary bearing (15, 16) is formed as a spherical head at one or both ends of the mirror rotation shaft (A1); and/or
- the primary bearing (16) is stationarily mounted in the secondary bearing (14), in particular at a point fixed on the secondary bearing (14) and spaced apart from the eccentric axis (A2) by a predetermined radial distance, and is in particular plain-bearing-mounted or rolling-bearing-mounted.

3. Projection unit (5) according to Claim 1 or 2, furthermore comprising:
- a housing (10) that protects the projection unit (5) from the outside; and
- a transparent cover plate (11) that closes the housing (10) on the output side and transmits the light beam (L) output by the projection unit (5);
- wherein a park position (P) of the concave mirror (8) can be set by a predetermined angular position of the mirror rotation shaft (A1), wherein, in the park position, a focus or a principal optical axis of the concave mirror (8) is located outside a beam path provided for the operation of the projection unit (5); and
- when the concave mirror (8) is repositioned from an operating position into its park position (P), the rotation (13) of the secondary bearing (14) associated with the rotation (12) of the mirror rotation shaft (A1) required for this purpose results in a superimposed translational movement of the mirror rotation shaft (A1) and hence of the concave mirror (8) in a direction away from the cover plate (11).

4. Projection unit (5) according to Claim 3, wherein
- the at least one driving member (18) is connected to the secondary bearing (14) or engages with an opening (20) or projection formed on the secondary bearing (14) such that the secondary bearing (14) is driven by the at least one driving member (18) during each rotation (12) of the mirror rotation shaft (A1) to perform an associated rotation (13) about the eccentric axis (A2) thereof.

5. Projection unit (5) according to Claim 3, wherein
- for each driving member (18), the secondary bearing (14) comprises a drive groove or guide slot (19) that extends around the primary bearing (16) of the mirror rotation shaft (A1) in a predetermined angular segment; and
- the respective drive groove or guide slot (19) is configured such that the associated driving member (18) moves freely therein during rotations of the mirror rotation shaft (A1) required for eyebox adaptations during operation of the projection unit (5) and strikes against one end of the drive groove or guide slot (19) during a further rotation (12) of the mirror rotation shaft (A1) beyond that range and required for setting the park position (P) of the concave mirror (8), thereby rotating the secondary bearing (14) about its eccentric axis (A2).

6. Projection unit (5) according to any of the preceding claims, wherein
- the mirror rotation shaft (A1) and the eccentric axis (A2) are arranged parallel to one another and spaced apart from one another by a predetermined axis spacing; or
- the mirror rotation shaft (A1) and the eccentric axis (A2) are arranged skew relative to one another.

7. Projection unit (5) according to any of the preceding claims, wherein
- the mirror rotation shaft (A1) and/or the primary bearing (15, 16) and/or secondary bearing (14) thereof is/are configured for automatic shaft-length adjustment such that, during the rotation (13) of the secondary bearing (14), the length of the mirror rotation shaft (A1) automatically adapts to a possibly resulting varying distance between the primary bearings (15, 16) at its two ends.

8. Field-of-view display device (2), in particular for use in a vehicle (1), comprising:
- a projection unit (5) according to any of the preceding claims; and
- a reflective pane that is, in particular, at least partially transparent and is arranged in the beam path of the light beam (L) output by the projection unit (5);
- wherein, in the field of view of a user, the reflective pane is arranged and configured such that it reflects the light beam (L) to an eyebox (E) that has been predetermined for the user, whereby the display content in the form of a virtual image (V) behind the reflective pane can be presented to the user.

9. Vehicle (1), in particular a motor vehicle, having mutually perpendicular longitudinal, transverse and vertical directions (X, Y, Z) of a vehicle-fixed Cartesian coordinate system (K), comprising:
- a vehicle pane that at least partially delimits an occupant compartment, in particular a windscreen (3); and
- a field-of-view display device (2) according to Claim 8, the projection unit (5) of which is arranged in the occupant compartment, in particular in the interior of an instrument panel (4) arranged below the windscreen (3) or directly below the top side (0) thereof, and the reflective pane of which is formed as a portion of the vehicle pane or as a combiner pane arranged in the occupant compartment;
- wherein the translational movement of the mirror rotation shaft (A1) resulting from the rotation (13) of the secondary bearing (14) comprises a one-sided or two-sided lowering (AZ) or raising thereof in the vertical direction (Z) of the vehicle-fixed Cartesian coordinate system (K).

10. Vehicle (1) according to Claim 9, wherein
- a park position (P) of the concave mirror (8) can be set in the projection unit (5) by a predetermined angular position of the mirror rotation shaft (A1), wherein, in the park position, a focus or a principal optical axis of the concave mirror (8) is located outside a beam path provided for the operation of the projection unit (5);
- electromechanical or mechanical fixing of the mounting of the mirror rotation shaft (A1) in the primary bearing (15, 16) is provided for a predetermined operating angle range of the mirror rotation shaft (A1) that is required for eyebox adaptations during operation of the projection unit (5), the fixing being configured to suppress vibrations of the concave mirror (8) caused by vehicle movements during driving operation of the vehicle (1); and
- the projection unit (5) is configured to automatically release this fixing upon leaving the operating angle range of the mirror rotation shaft (A1) for the purposes of repositioning the concave mirror (8) into the park position (P).

## Revendications

1. Unité de projection (5) pour un dispositif d'affichage de champ de vision (2), en particulier pour une utilisation dans un véhicule (1), comprenant :
- une unité d'imagerie (6) formée pour générer un faisceau lumineux (L) avec un contenu d'affichage souhaité ;
- un miroir concave (8) disposé et formé sur le trajet optique du faisceau lumineux (L) généré de telle manière que le faisceau lumineux (L) quitte l'unité de projection (5) sous une forme et dans une direction prédéfinies pour être ensuite réfléchi depuis une vitre réfléchissante en partie transparente disposée dans le champ de vision d'un utilisateur vers sa région oculaire (E) et pour présenter ainsi le contenu d'affichage à l'utilisateur sous la forme d'une image virtuelle (V) derrière la vitre réfléchissante ;
- le miroir concave (8) pouvant être tourné par un entraînement (M) autour d'un axe de rotation (A1) de miroir relié de manière solidaire à celui-ci , qui est monté de manière à pouvoir tourner dans un palier primaire (16), pour adapter la position de la région oculaire ;
- **caractérisée en ce que** le palier primaire (16) est monté au moins sur une extrémité de l'axe de rotation (A1) de miroir de manière excentrique dans un palier secondaire (14), qui peut être entrainé en rotation (13) autour de son axe excentrique (A2) fixe par rapport à l'unité de projection (5) au moyen d'au moins un entraîneur (18) cotournant avec l'axe de rotation (A1) de miroir, ce qui provoque un mouvement de translation superposé de l'axe de rotation (A1) de miroir et donc du miroir concave (8) dans une direction transversale à celui-ci.

2. Unité de projection (5) selon la revendication 1,
- le palier primaire (15, 16) étant formé comme une tête sphérique sur l'une ou les deux extrémités de l'axe de rotation (A1) de miroir ; et/ou
- le palier primaire (16) étant monté, en particulier étant monté par glissement ou roulement, de manière stationnaire, en particulier sur un point fixé sur le palier secondaire (14) à une distance radiale prédéfinie de l'axe excentrique (A2), dans le palier secondaire (14).

3. Unité de projection (5) selon la revendication 1 ou 2, comprenant en outre :
- un boîtier (10) protégeant l'unité de projection (5) de l'extérieur ; et
- une vitre de recouvrement (11) transparente, qui ferme le boîtier (10) côté sortie et transmet le faisceau lumineux (L) émis par l'unité de projection (5) ;
- une position de stationnement (P) du miroir concave (8) pouvant être réglée par une position angulaire prédéfinie de l'axe de rotation (A1) de miroir, dans laquelle un foyer ou un axe optique principal du miroir concave (8) se situe en dehors d'un trajet optique prévu pour le fonctionnement de l'unité de projection (5) ; et
- lors de l'ajustement du miroir concave (8) d'une position de fonctionnement dans sa position de stationnement (P), la rotation (13) du palier secondaire (14) liée à la rotation (12) nécessaire à cet effet de l'axe de rotation (A1) de miroir résultant en un déplacement en translation superposé de l'axe de rotation (A1) de miroir et ainsi du miroir concave (8) dans une direction s'éloignant de la vitre de recouvrement (11).

4. Unité de projection (5) selon la revendication 3,
- l'au moins un entraîneur (18) étant relié au palier secondaire (14) ou venant en prise avec une ouverture (20) ou une partie faisant saillie formée sur le palier secondaire (14) de telle manière que le palier secondaire (14) est entraîné par l'au moins un entraîneur (18) à chaque rotation (12) de l'axe de rotation (A1) de miroir jusqu'à une rotation (13) associée autour de son axe excentrique (A2).

5. Unité de projection (5) selon la revendication 3,
- le palier secondaire (14) pour chaque entraîneur (18) comportant une rainure ou un guide (19) d'entraîneur s'étendant tout autour du palier primaire (16) de l'axe de rotation (A1) de miroir dans un segment angulaire prédéfini ; et
- la rainure respective ou le guide respectif (19) d'entraîneur étant formée/formé de telle sorte que l'entraîneur (18) associé s'y déplace librement lors de rotations de l'axe de rotation (A1) de miroir, qui sont nécessaires lors du fonctionnement de l'unité de projection (5) pour les adaptations de région oculaire, et vient buter contre une extrémité de la rainure ou du guide (19) d'entraîneur lors de la rotation supplémentaire (12) de l'axe de rotation (A1) de miroir, qui est nécessaire au réglage de la position de stationnement (P) du miroir concave (8) et fait ainsi tourner le palier secondaire (14) autour de son axe excentrique (A2).

6. Unité de projection (5) selon l'une des revendications précédentes,
- l'axe de rotation (A1) de miroir et l'axe excentrique (A2) étant disposés parallèlement l'un par rapport à l'autre à une distance axiale prédéfinie l'un de l'autre ; ou
- l'axe de rotation (A1) de miroir et l'axe excentrique (A2) étant disposés de manière imbriquée l'un par rapport à l'autre.

7. Unité de projection (5) selon l'une des revendications précédentes,
- l'axe de rotation (A1) de miroir et/ou ses paliers primaires (15, 16) et/ou ses paliers secondaires (14) étant formés avec une adaptation automatique de la longueur d'axe de sorte qu'une longueur de l'axe de rotation (A1) de miroir s'adapte automatiquement à une distance variant éventuellement entre les paliers primaires (15, 16) de leurs deux extrémités lors de la rotation (13) du palier secondaire (14).

8. Dispositif d'affichage de champ de vision (2), en particulier en particulier pour une utilisation dans un véhicule (1), comprenant :
- une unité de projection (5) selon l'une des revendications précédentes ; et
- une vitre réfléchissante, en particulier au moins en partie transparente, disposée sur le trajet optique du faisceau lumineux (L) émis par l'unité de projection (5) ;
- la vitre réfléchissante étant disposée et formée dans le champ de vision d'un utilisateur de telle manière qu'elle réfléchit le faisceau lumineux (L) vers une région oculaire (E) prédéfinie pour l'utilisateur, ce qui permet de lui présenter le contenu d'affichage sous la forme d'une image virtuelle (V) derrière la vitre réfléchissante.

9. Véhicule (1), en particulier véhicule à moteur, avec des directions longitudinales, transversales et verticales (X, Y, Z) perpendiculaires les unes par rapport aux autres d'un système de coordonnées cartésiennes (K) propre au véhicule, comprenant :
- une vitre de véhicule, qui délimite au moins en partie un habitacle, en particulier un pare-brise (3) ; et
- un dispositif d'affichage de champ de vision (2) selon la revendication 8, dont l'unité de projection (5) est disposée dans l'habitacle, en particulier à l'intérieur du tableau de bord (4) disposé sous le pare-brise (3) ou directement sous le côté supérieur (0) de celui-ci et dont la vitre réfléchissante est formée comme une section du pare-brise ou comme une vitre combinée disposée dans l'habitacle ;
- le déplacement par translation de l'axe de rotation (A1) de miroir résultant de la rotation (13) du palier secondaire (14) comprenant son abaissement (AZ) sur un ou sur deux côtés ou son relèvement dans la direction de hauteur (Z) du système de coordonnées cartésiennes (K) propre au véhicule.

10. Véhicule (1) selon la revendication 9,
- une position de stationnement (P) du miroir concave (8) pouvant être réglée dans l'unité de projection (5) par une position angulaire prédéfinie de l'axe de rotation (A1) de miroir, dans laquelle un foyer ou un axe optique principal du miroir concave (8) se situe en dehors d'un trajet optique prévu pour le fonctionnement de l'unité de projection (5) ;
- une fixation électromécanique ou mécanique du palier de l'axe de rotation (A1) de miroir dans le palier primaire (15, 16) étant prévue pour une plage angulaire de fonctionnement prédéfinie de l'axe de rotation (A1) de miroir, qui est nécessaire pour des adaptations de la région oculaire lors du fonctionnement de l'unité de projection (5), laquelle est formée pour supprimer des vibrations du miroir concave (8) liées à des mouvements du véhicule lorsque le véhicule (1) est en mouvement ; et
- l'unité de projection (5) étant formée pour ouvrir automatiquement ladite fixation après avoir quitté la plage angulaire de fonctionnement de l'axe de rotation (A1) de miroir pour ajuster le miroir concave (8) dans la position de stationnement (P).
